# EUROPEAN PATENT APPLICATION

(11) **EP 1 037 160 A2**
(43) Date of publication of application: **20.09.2000**
(21) Application number: 00103707.6
(22) Date of filing: 22.02.2000
(51) Int. Cl.: G06K 7/00

(54) **A reading and writing device for an ic card**

(30) Priority: 24.02.1999 JP 4604799
(71) Applicant: STAR MICRONICS CO., LTD., Shizuoka-shi, Shizuoka-ken 422-8654 (JP)
(72) Inventor: Masuda, Hisashi, Shizuoka-shi, Shizuoka 422-8654 (JP)
(74) Representative: Nöth, Heinz, Dipl.-Phys.

(57) **Abstract**

A reading and writing apparatus for an IC card comprises: a travel path for traveling the IC card inserted in a first direction to at least a reading and writing position; a travel mechanism for traveling the IC card along the travel path in the first direction and in a second direction opposite to the first direction; a holder having an engaging piece projecting into a travel path, the holder being moved from a standby position where the IC card comes into contact with the engaging piece to at least the reading and writing position; a guide for movably supporting the holder approximately along the travel path to guide the holder into proximity with the IC card as the holder moves from the standby position to the reading and writing position; a contacting piece provided to the holder, the contacting piece contacting an external terminal of the IC card when the holder is at the reading and writing position; and a biasing member for returning the holder to the standby position. The engaging piece is provided to the holder so as not to turn in the first direction and to turn in the second direction, thereby when the IC card is transferred in the first direction, the holder is pushed by the IC card by an engagement of the engaging piece with the IC card, and when the IC card is transferred in the second direction, the engaging piece is retracted to pass the IC card therethrough.

## Description

### BACKGROUND OF THE INVENTION

The present invention relates to a reading writing apparatus for an integrated circuit (hereinafter referred to the "IC") card for reading data recorded in IC cards and for recording data in IC cards, and specifically relates to improvements in the travel mechanism in a reading and writing apparatus for an IC card.

Japanese Patent Application, First Publication, No. 271287/87 and Japanese Patent No. 2757343 disclose conventional reading and writing apparatus for an IC card. The construction of the IC reading and writing device approximately follows. An IC card inserted into the apparatus is traveled in a direction along a travel path. The IC card engages with an engaging piece of a holder at a standby position while being traveled, and the holder is pushed by the IC card via the engaging piece so as to be moved to the position for reading and writing. The reading and writing is performed on the IC card by contacting pieces installed in the holder. The holder comes into proximity with the IC card along a guide while the holder moves to the reading and writing position. Subsequently, the contacting pieces contact external terminals of an IC of the IC card at the reading and writing position, whereby reading and writing can be performed. After completion of the reading and writing, the IC card is traveled in the opposite direction and discharged from the apparatus. The holder follows the IC card by means of a return spring and returns to the standby position while it is away from the travel path.

The engaging piece of the reading and writing apparatus for an IC card is an important element for providing the movement of the holder and the contact of the contacting pieces with the IC card. The engaging piece projects into the travel path and is formed unitarily with the holder as a rigid body in order to engage with the IC card. Therefore, the insertion direction of the IC card is restricted to one direction toward the engaging piece from the contacting pieces. That is, when the IC card is inserted in the reverse direction, the IC card is blocked by the engaging piece of the holder, and therefore the IC card cannot reach the contacting pieces. If the IC card were to be able to pass through not only in one direction but also in the opposite direction, the apparatus could have additional functions such as being able to issue new IC cards, and would be of increased utility. However, the conventional reading and writing apparatuses for an IC card cannot meet this requirement.

### SUMMARY OF THE INVENTION

An object of the invention is to provide a reading and writing apparatus for an IC card in which an IC card can be inserted in entire direction, enabling new functions such as the issuing of new cards.

The invention provides a reading and writing apparatus for an IC card comprising: a travel path for traveling the IC card inserted in a first direction to at least a reading and writing position; a travel mechanism for traveling the IC card along the travel path in the first direction and in a second direction opposite to the first direction; a holder having an engaging piece projecting into a travel path, the holder being moved from a standby position where the IC card comes into contact with the engaging piece to at least the reading and writing position; a guide for movably supporting the holder approximately along the travel path to guide the holder into proximity with the IC card as the holder moves from the standby position to the reading and writing position; a contacting piece provided to the holder, the contacting piece contacting an external terminal of the IC card when the holder is at the reading and writing position; and a biasing member for returning the holder to the standby position. The engaging piece is provided to the holder so as not to turn in the first direction and to turn in the second direction, thereby when the IC card is transferred in the first direction, the holder is pushed by the IC card by an engagement of the engaging piece with the IC card, and when the IC card is transferred in the second direction, the engaging piece is retracted to pass the IC card therethrough.

According to the invention, the apparatus has the same functions as a conventional apparatus when a card is inserted in one direction. That is, when an IC card is inserted in a first direction, the IC card is traveled in that direction along the travel path and comes into contact with the engaging piece of the holder at the standby position. The engaging piece engages with the IC card since the turning thereof in that direction is restricted. According to further travel of the IC card, the holder is pushed by the IC card via the engaging piece and moves to the reading and writing position along the travel path. As a result, the contacting piece contacts the external terminal of the IC of the IC card, whereby reading and writing can be performed. After completion of the reading and writing, the IC card can be discharged by traveling it in the reverse direction. According to the discharging operation, the holder follows the IC card by the biasing member, and returns to the standby position, away from the travel path.

In contrast, when the IC card is inserted in the opposite direction, the IC card comes into contact with the engaging piece. With the further insertion of the IC card, the engaging piece is pushed by the IC card and is turned in the opposite direction while the holder is at the standby position. As a result, the engaging member is retracted from the travel path, and the IC card passes through the engaging piece. When the entire length of the IC card has passed through the engaging piece, the IC card is in the same condition as the case in which the IC card is inserted in the first direction. Subsequently, the IC card can be traveled to the opposite direction and be discharged from the apparatus.

According to the invention, the engaging piece is designed to allow the passing through of the IC card in the opposite direction, and therefore the IC card can be inserted in the entire direction. As a result, the invention can provide an IC reading and writing device having additional functions such as being able to issue new IC cards.

The engaging piece according to the invention is pivotably mounted to the holder for turning in the opposite direction. Normally, the engaging piece preferably projects into the travel path so that an IC card may come into contact therewith. Therefore, the engaging piece is preferably biased to the position by biasing members such as springs. According to the preferred embodiment, the biasing member for returning the holder to the standby position also serves as the above biasing member. That is, the engaging piece is biased to the projecting position by the biasing member for returning the holder to the standby position, and therefore reduction in the number of the parts and compact design are possible.

According to the preferred embodiment of the invention, the engaging piece is provided with a sliding member for contacting the IC card when the IC card which is inserted in the opposite direction passes through the engaging piece. According to the embodiment, the IC card passes through the engaging member while the surface thereof is in contact with the sliding member. Therefore, travel of the IC card and turning of the engaging piece in the opposite direction can be smoothly performed without resistance. Moreover, another advantage is that the surface of the IC card is not easily damaged. As the sliding member, rollers which rotate in the insertion direction and pads having extremely low frictional resistance may be used.

According to the preferred embodiment, the engaging piece has an incline at which the IC card inserted opposite to the first direction comes into contact. For this construction, the IC card which is inserted in the opposite direction and comes into contact with the engaging piece is traveled in the opposite direction while it pushes the engaging piece along the incline, so that the IC card can be smoothly traveled and the engaging piece can be smoothly turned.

### BRIEF DESCRIPTION OF THE DRAWINGS

Fig. 1A is a right side view of the reading and writing apparatus for an IC card according to an embodiment of the invention.
Fig. 1B is a left side view of the Reading and writing apparatus for an IC card according to an embodiment of the invention.
Fig. 2 is a view taken along line II-II in Fig. 1A.
Fig. 3 is a view taken along line III-III in Fig. 1A.
Fig. 4 is a view (partial section) viewed from the arrow IV in Fig. 1A.
Fig. 5 is a plan view of the IC card.
Figs. 6A to 6C are side views illustrating the reading and writing operations for an IC card which is inserted from the front.
Figs. 7A and 7B are side views illustrating the reading and writing operations for an IC card which is inserted from the rear.
Fig. 8 is a perspective view of a variation of the engaging piece according to the invention.

### DETAILED DESCRIPTION OF THE INVENTION

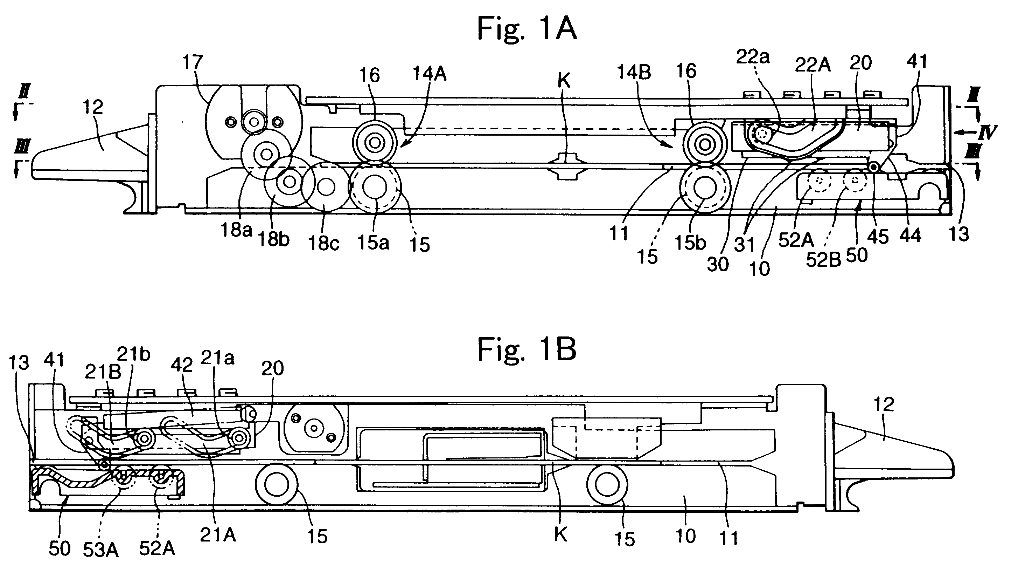

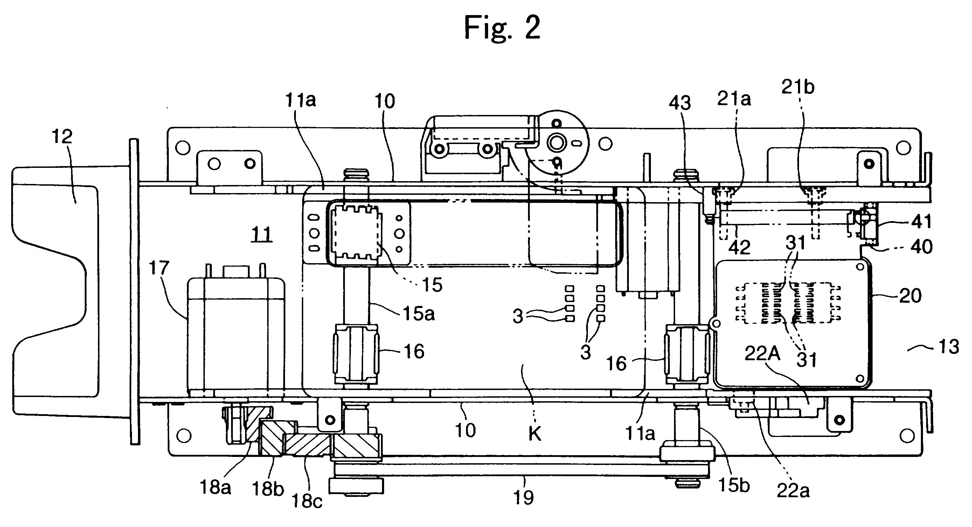

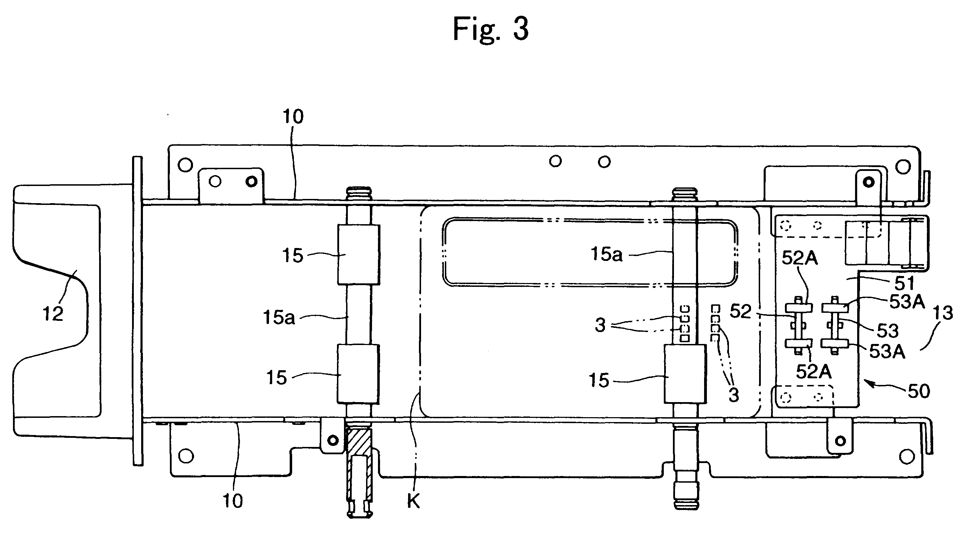

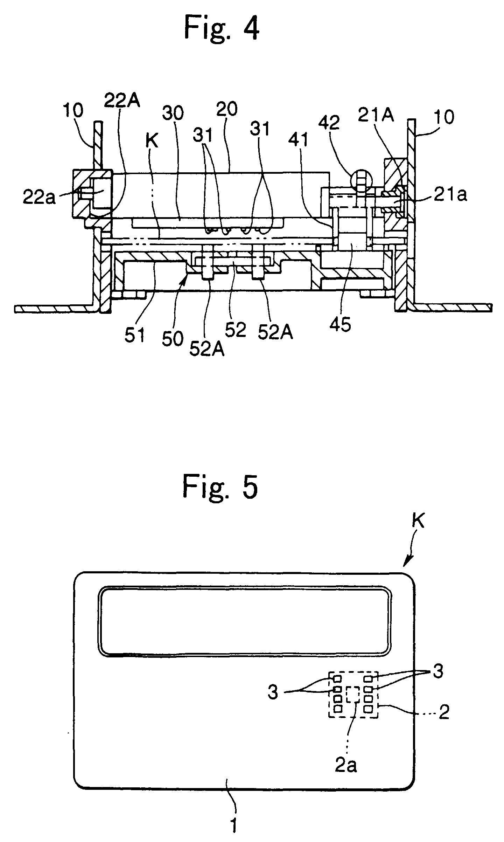

Embodiments of the invention will be explained with reference to the drawings. Fig. 1A is a right side view of a reading and writing apparatus for an IC card according to the embodiment, Fig. 2 is a view taken along line II-II in Fig. 1A, and Fig. 3 is a view taken along line III-III in Fig. 1A. The left side in the figures is the front side of the apparatus; the right side in the figures is the rear side of the apparatus; and the upper side in Figs. 2 and 3 is the left side of the apparatus; and the lower side is the right side of the apparatus. In the following descriptions, the front, back, left, and right directions are defined as directions based on the apparatus. Fig. 1B is a left side view of the apparatus and Fig. 4 is a view (partial section) viewed in the direction along the arrow IV in Fig 1A.

The basic actions in the apparatus will be explained hereinafter with reference to Fig. 1A. An IC card (hereinafter referred to simply as the "card") K is inserted into a front insertion opening 12 provided in the apparatus; the apparatus travels the card to a reading and writing position at the rear end thereof During the traveling, a holder 20, which is usually at the standby position, comes into proximity with the card K from above, and a contacting piece 31 provided on the holder 20 contacts an external terminal 3 of the card K, thereby conducting reading and writing. After the reading and writing, the apparatus travels the card K to the front and discharges it through the front insertion opening 12. The holder 20 returns to the standby position with the discharging movement of the card K.

The card K is a card with external terminals according to the Japanese Industrial Standard No. 6303. As shown in Fig. 5, the card K is packaged together with an IC 2 having an element 2a at a predetermined position on a rectangular resin substrate 1. The surface of the IC 2 is provided with eight external terminals 3 which are arranged in four lines and two rows. The IC 2 is located at the end portion of the card K in the longitudinal direction and is disposed offset from the center of the width of the substrate 1. The card K is inserted into the front insertion opening 12 in such a way that the IC 2 side is directed to the rear side of the apparatus and the external terminals 3 faces up. In this insertion condition, the IC is positioned offset to the right from the center of the width of the substrate 1.

Next, the construction according to the embodiment will be explained in detail.

Numeral 10 in Figs. 1 to 4 indicate a pair of right and left side frames. Grooves 11a are respectively formed on the facing surfaces of the side frames 10. A travel path 11 is defined between the grooves 11a to travel the card K in a horizontal orientation toward a direction from the front to the rear and toward the reverse direction from the rear to the front. The card K is traveled while respective sides thereof fit into the left and right grooves 11a. The front insertion opening 12 and a rear insertion opening 13 for inserting the card K into the travel path 11 are provided at the front end and the rear end respectively between the side frames 10. Plural card sensors (not shown) are provided at predetermined positions of the side frame 10. The card sensors detect the position of the card K to control the travel mechanism described bellow.

As shown in Fig. 1A, a pair of front travel rollers 14A and a pair of rear travel rollers 14B as the travel mechanism are disposed between the side frames 10. Each pair of travel rollers 14A and 14B consists of a lower driving roller 15 and an upper driven roller 16 so as to clamp the card K and travel the card K from the front to the rear, or from the rear to the front, according to the rotation of the driving roller 15. A travel motor 17 is supported by the side frame 10 at the front end of the apparatus, and the travel motor 17 rotates the driving rollers 15. As shown in Fig. 1A and Fig. 2, the rotation of the travel motor 17 is transmitted to the driving roller shaft 15a of the pair of the front travel rollers 14A via intermediate gear group 18a, 18b and 18c supported by the right side frame 10, and is transmitted to the driving roller shaft 15b of the pair of the rear travel rollers 14B via a timing belt 19. The distance between the pairs of front and rear travel rollers 14A and 14B is set so that both ends of the card K are simultaneously supported thereon and the travel of the card K can be continued. The distance between the front insertion opening 12 and the pair of the front travel rollers 14A and the distance between the rear insertion opening 13 and the pair of the rear travel rollers 14B are set so that the card K can be drawn into the apparatus.

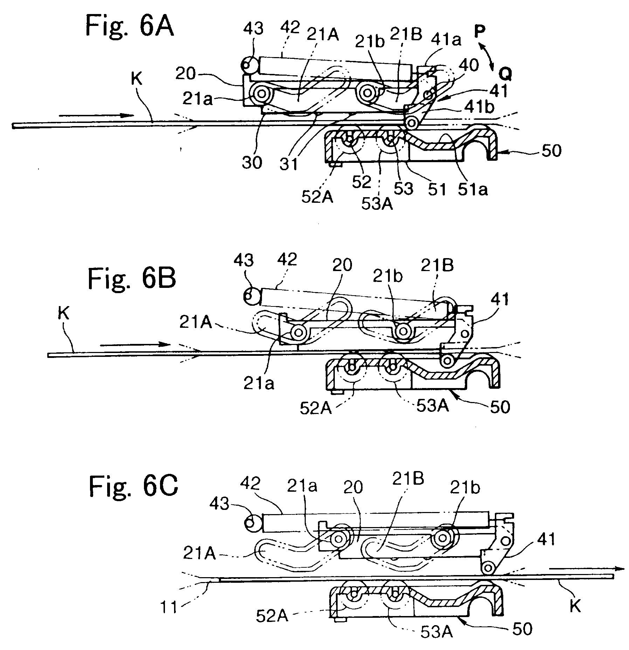

A holder 20 is disposed along the travel path 11 at the rear end of the apparatus. As shown in Fig. 1 and 2, guide holes 21A and 21B are formed on the inside of the left side frame 10, and a guide hole 22A is formed on the inside of the right side frame 10. The holder 20 is supported by the guide holes 21A, 21B and 22A via two pins 21a and 21b projecting from left side surface of the holder 20 and a pin 22a projecting from the right side surface of the holder 20. As shown in Fig. 2, the left two pins 21a and 21b are remote from each other in a certain distance along the front and the rear. The right pin 22a is disposed between the two left pins 21a and 21b and at just after the left and front pin 21a. The guide holes 21A, 21B and 22A have the same configuration. Each guide hole comprises a downward portion beginning from the front end thereof, an intermediate lowermost portion, and an upward portion toward the rear end thereof As shown in Figs. 6A to 6C, the holder 20 is movable back and forth while maintaining the horizontal orientation while it is guided by the guide holes 21A, 21B and 22A via pins 21a, 21b and 22a. While moving back and forth, the holder 20 moves up and down according to the height of the guide holes 21A, 21B and 22B. When the pins 21a, 21b and 22a are positioned at the front ends of the guide holes 21A, 21B and 22A, the holder 20 is at the standby position (the state in Fig. 6A). When the pins 21a, 21b and 22a are positioned at the lowermost portion of the guide holes 21A, 21B and 22A, the holder 20 is at the position for reading and writing (the state in Fig. 6B). When the pins 21a, 21b and 22a are positioned at the rear end of the guide holes 21A, 21B and 22A, the holder 20 is at the highest retracted position (the state in Fig. 6C).

As shown in Fig. 1A, a contacting piece board 30 is contained at the lower side of the holder 20. The contacting piece board 30 is movably biased downward by a biasing member (not shown). As shown in Fig. 2, plural (eight in the embodiment) contacting pieces 31 are arranged at the lower surface of the contacting piece board 30 corresponding to the external terminals 3. The contacting pieces 31 are electrical contacts for contacting the external terminal 3 of the card K and performing reading and writing with the IC 2.

As shown in Fig. 2 and 6, an engaging piece 41 is rotatably supported at the rear end of the left side of the holder 20 by a horizontal shaft 40 which is perpendicular to the travel direction of the card K. The engaging piece 41 comprises an upper portion 41a above the shaft 40 and a lower portion 41b below the shaft 40. The upper portion 41a is mounted to a rear end of a return spring 42, which is a tension spring. The return spring 42 extends toward the front, and the front end thereof is mounted to a pin 43 extending from the left side frame 10. The return spring 42 biases the engaging piece 41 to maintain the upper portion 41a in contact with the rear surface of the holder 20, and also biases the holder 20 to the standby position. Normally, the holder 20 is at the standby position as shown in Fig. 6A. In this condition, the lower portion 41b of the engaging piece 41 projects into the travel path 11 from above so that it can comes into contact with the card K traveled from the front. When the holder 20 is at the retracted position, as shown in Fig. 6C, the lower portion 41b of the engaging piece 41 is retracted above the travel path 11.

The lower portion 41b is restricted in turning toward the rear in the direction along the arrow P (shown in Fig. 6A), since the upper portion 41a is biased to be in contact with the holder 20. In contrast, the engaging piece 41 can turn toward the front in the direction along the arrow Q, when an external force is exerted. When the external force is no longer exerted, the engaging piece 41 turns in the direction along the arrow P by the force of the return spring 42, and returns to the initial position.

As shown in Fig. 1A, the lower portion 41b of the engaging piece 41 is formed with an incline 44 on the rear surface thereof The incline 44 forward slants toward the lower end thereof At the lower end of the engaging piece 41, a roller 45 is rotatably supported by a shaft which is parallel to the shaft 20.

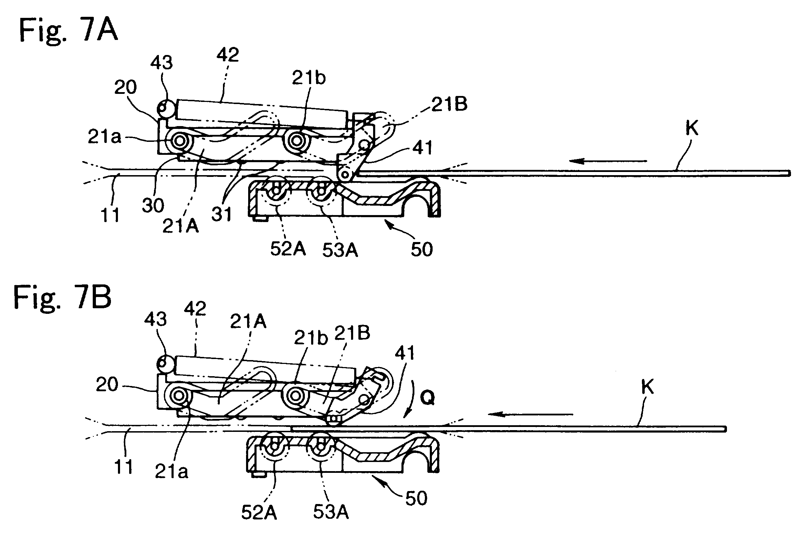

When the card K is inserted through the front insertion opening 12, the card is subsequently traveled to the rear along the travel path 11. Subsequently, as shown in Fig. 6A, the front end of the card K comes into contact with the lower portion 41b of the engaging piece 41 of the holder 20, which is at the standby position. Since the engaging piece 41 is restricted in turning toward the rear, the holder 20 is pushed by the card K. As the card K is further traveled to the reading and writing position, the holder 20 moves and comes into proximity with the card K along the guide holes 21A, 21B and 22A, and reaches the reading and writing position. The contacting pieces 31 contact the external terminals 3 of the IC 2 of the card K at the reading and writing position, so that reading and writing can be performed. When the card K is inserted through the rear insertion opening 13, as shown in Fig. 7A, the front end of the card K comes into contact with the engaging piece 41. When the engaging piece 41 is subjected to further insertion operation, as shown in Fig. 7B, the engaging piece 41 is pushed by the card K and turns in the direction along the arrow Q while the holder 20 is maintained at the standby position. Since the engaging piece 41 is retracted above the travel path 11, the card K can pass through the engaging piece 41 and can be traveled to the front.

A receiving member 50 is disposed below the holder 20 with the travel path 11 inbetween. The receiving member 50 comprises a receiving plate 51 and two pairs of rollers 52A and 53A as shown in Figs. 3 and 4. The receiving plate 51 is supported by the right and left side frames 10. The rollers 52A and 53A are rotatably supported by the receiving plate 51 via two shafts 52 and 53 respectively. The rollers 52A and 53A are spaced apart from each other on the shaft 52 and 53 in the right and left directions. The rollers 52A and 53A receive and support the lower surface of the IC 2 of the card K, so that the contacting piece 31 securely contacts the external terminals 3 at an adequate pressure when the holder 20 and the card K reaches the reading and writing position. A recess 51a is formed at the upper surface of the receiving plate 51. The recess 51a avoids interference between the receiving plate 51 and the engaging piece 41 which moves with the holder 20.

The above explains the construction of the reading and writing apparatus for an IC card according to the embodiment. The effects and advantages of the apparatus are hereinafter explained separately for the case of the front insertion in which the card K is inserted through the front insertion opening 12 and traveled to the rear, and for the case of the rear insertion in which the card K is inserted through the rear insertion opening 13 and is traveled to the front.

### (A) Front Insertion: Figs. 6A to 6C

When the card K is inserted through the front insertion opening 12, the card sensor detects it and the travel motor 17 starts to rotate, and the driving rollers 15 of the pair of the front and rear travel rollers 14A and 14B rotate in the direction for rearward travel. Then, the card K is clamped by the pair of the travel rollers 14A and 14B in that order, and is traveled to the rear along the travel path 11. Subsequently, the card K comes into contact with the lower portion 41b of the engaging piece 41 of the holder 20, as shown in Fig. 6A. The engaging piece 41 engages with the card K since the turning of the piece in the direction along the arrow P is restricted. According to the further travel of the card K, the holder 20 is pushed by the card K via the engaging piece 41, and comes into proximity with the card K along the guide holes 21A, 21B and 22A, and reaches the reading and writing position, as shown in Fig. 6B. When the holder 20 and card K reached the reading and writing position, the travel motor 17 stops. At the reading and writing position, the contacting pieces 31 of the holder 20 contact the external terminals 3 of the card K which are supported by the rollers 52A and 53A of the receiving member 50, so that reading and writing can be performed. After the completion of the reading and writing, the travel motor 17 rotates in reverse, and the card K is traveled to the front and is discharged from the front insertion opening 12. In the discharging operation, the holder 20 moves away from the travel path 11 following the movement of the card K, and is returned to the standby position by the return spring 42.

The card K can be discharged from the rear insertion opening 13 in the embodiment. In this case, the card K is traveled to the rear from the reading and writing position. The holder 20 is pushed by the card K and moves rearwardly and upwardly along the guide holes 21A, 21B and 22A, and reaches the retracted position. As a result, as shown in Fig. 6C, the engagement of the engaging piece 41 with the card K is released, and the card K is further traveled rearwardly and is discharged from the rear insertion opening 13. When the engagement is released, the engaging piece is pushed to return to the front standby position with the holder 20 by the force of the return spring 42. However, as the lower end of the engaging piece 41 contacts the surface of the card K, the movement of the engaging piece and the holder 20 to the front is restricted. In this condition, the engaging piece 41 presses the card K since the holder 20 is pushed to move to the lowermost portion of the guide holes 21A, 21B and 22A. However, frictional resistance is decreased by the roller 45, so that the card K can be smoothly discharged from the rear Moreover, the surface of the card K is not damaged by the engaging piece 41.

### (B) Rear Insertion: Figs. 7A and 7B

When the card K is inserted through the rear insertion opening 13, the card sensor detects it and the travel motor 17 begins to rotate, and the driving rollers 15 of the pair of the front and rear travel rollers 14A and 14B rotate in the direction for forward travel. Then, the card K comes into contact with the lower portion 41b of the engaging piece 41, as shown in Fig. 7A. When the card K is further inserted, the engaging piece 41 is pushed by the card K and is turned in the direction along the arrow Q shown in Fig. 7B while the holder 20 is at the standby position. As a result, the engaging piece is retracted from the travel path 11 as shown in the figure, and the card K passes through the engaging piece 41 while rotating the roller 45 which contacts the surface of the card K. Then, the card K is clamped by the pair of the rear travel rollers 14B and is traveled to the front. When the entire length of the card K has passed the engaging piece 41, the engaging piece 41 returns to the initial position. The card K is continuously traveled to the front and is received by the pair of the front rollers 14A and is discharged from the front insertion opening 12.

According to the reading and writing apparatus for an IC card of the embodiment, the engaging piece 41 of the holder 20 is designed to allow the passing through of the card K from the rear, and therefore the card K can be inserted from either the front or the rear direction. Therefore, the reading and writing apparatus for an IC card can be equipped with additional functions, in which, for example, new cards K are issued by inserting a new card K through the rear insertion opening 13 and are discharged from the front insertion opening 12.

Although the return spring 42 is originally a part for returning the holder 20 to the standby position, it is also used as a biasing member for returning the engaging piece 41 to the initial position projecting to the travel path 11. Therefore, the apparatus can achieve reduction in the number of parts and be of compact design.

Furthermore, the roller 45 is mounted to the engaging piece 41 so that travel of the card K and turning of the engaging piece 41 can be smoothly performed with no resistance, and the card is not easily damaged when the card K passes through the engaging piece 41. In addition, the rear surface of the engaging piece 41 for receiving the card K which is inserted through the rear insertion opening 13 is made to have the incline 44, so that the travel of the card K and turning of the engaging piece 41 can be performed even more smoothly.

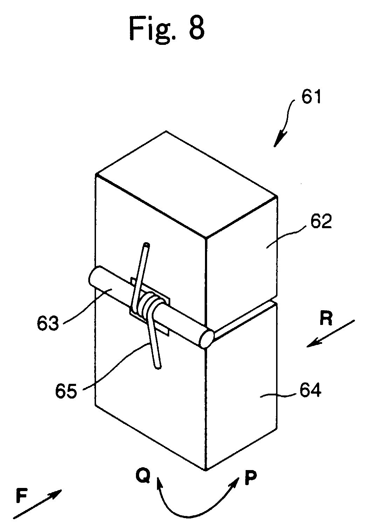

Fig. 8 shows a variation of a engaging piece provided in the holder 20 instead of the engaging piece 41. The engaging piece 61 comprises a fixed piece 62 which is secured to the holder 20. A turning piece 64 is rotatably connected to the lower end of the fixed piece 62 via a hinge 63. A return spring 65 made of a torsion coiled spring is attached to the hinge 63. The fixed piece 62 and the turning piece 64 are rectangular pieces having the same cross sectional configuration and dimensions, and the corners of the adjoining ends thereof are connected to each other via hinge 63. The turning piece 64 can turn in the direction along the arrow Q in the figure, but turning in the direction along the arrow P is restricted since it comes to contact with the lower surface of the fixed piece 62. The return spring 65 biases the turning piece 64 in the direction along the arrow P. The engaging piece 61 is disposed at the same position as the aforementioned engaging piece 41. The hinge 63 is directed to the front side of the apparatus and extends horizontally and perpendicular to the travel direction of the card K.

The functions of the engaging piece are described bellow. In the case of the front insertion in which the card K is traveled from the arrow F in Fig. 8, the card K comes into contact with the front surface of the turning piece 64. The turning piece 64 is pushed by the card K; however, it is not turned in the direction along the arrow P since it contacts the lower surface of the fixed piece 62. Therefore, the engaging position of the turning piece 64 is maintained, and the card K is traveled to the reading and writing position with the holder 20 maintaining engagement condition with the engaging piece 61. In contrast, in the case of the rear insertion in which the card K is inserted in the direction along the arrow R in Fig. 8, the card K comes into contact with the rear surface of the turning piece 64. The turning piece 64 is pushed by the card K and is turned in the direction along the arrow Q against the biasing force of the return spring 65. As a result, the turning piece 64 is retracted from the travel path 11, thereby allowing the passing of the card K through the engaging piece 61. When the card K has passed therethrough, the turning piece 64 returns to the initial position by the return spring 65. It should be noted that the return spring 65 for returning the turning piece 64 to the initial position is separately provided from the aforementioned return spring 42. Therefore, when the engaging piece 61 is applied to the invention, an end of the return spring 42 may be mounted on the holder 20. Although the fixed piece 62 hinged with the turning piece 64 is secured to the holder 20 in this variation, the fixed piece may be omitted. That is, the turning piece may be directly secured to the holder 20 by the same means as the connecting means in which the turning piece 64 is connected to the fixed piece 62.

As explained above, in the invention, the engaging piece of the holder is so designed that while it is restricted to turn in one direction to cause the contacting piece to be in contact with the card when the card is transferred in one direction, it is allowed to turn in the other direction to pass the card when the card is transferred in the other direction. Therefore, the card can be inserted in entire direction of the first direction and the opposite direction, and therefore new function such as the issuing new cards can be obtained.

## Claims

1. A reading and writing apparatus for an IC card comprising:
a travel path for traveling the IC card inserted in a first direction to at least a reading and writing position;
a travel mechanism for traveling the IC card along the travel path in the first direction and in a second direction opposite to the first direction;
a holder having an engaging piece projecting into a travel path, the holder being moved from a standby position where the IC card comes into contact with the engaging piece to at least the reading and writing position;
a guide for movably supporting the holder approximately along the travel path to guide the holder into proximity with the IC card as the holder moves from the standby position to the reading and writing position;
a contacting piece provided to the holder, the contacting piece contacting an external terminal of the IC card when the holder is at the reading and writing position; and
a biasing member for returning the holder to the standby position;
wherein the engaging piece is provided to the holder so as not to turn in the first direction and to turn in the second direction, thereby when the IC card is transferred in the first direction, the holder is pushed by the IC card by an engagement of the engaging piece with the IC card, and when the IC card is transferred in the second direction, the engaging piece is retracted to pass the IC card therethrough.

2. A reading and writing apparatus for an IC card according to claim 1, wherein the biasing member biases the engaging piece to the position where the IC card comes into contact therewith.

3. A reading and writing apparatus for an IC card according to claim 1, wherein the engaging piece is directly and swingably mounted to the holder.

4. A reading and writing apparatus for an IC card according to claim 1, wherein the engaging piece comprises a fixed piece secured to the holder and a turning piece pivotably mounted to the fixed piece.

5. A reading and writing apparatus for an IC card according to claim 4, wherein an another biasing member is provided between the turning piece and the fixed piece, and the another biasing member biases the turning piece to the position where the IC card comes into contact therewith.

6. A reading and writing apparatus for an IC card according to claim 1, wherein the engaging piece is provided with a sliding member which contacts the IC card when it passes through in the second direction.

7. A reading and writing apparatus for an IC card according to claim 6, wherein the sliding member is a rotatable roller.

8. A reading and writing apparatus for an IC card according to claim 1, wherein the engaging piece has an incline with which the IC card inserted in the second direction comes into contact.
